# EUROPEAN PATENT APPLICATION

(11) **EP 2 111 065 A1**
(43) Date of publication of application: **21.10.2009**
(21) Application number: 08007664.9
(22) Date of filing: 18.04.2008
(51) Int. Cl.: H04W 4/00

(54) **Method for assigning communication resources to a mobile radio device**

(71) Applicant: Alcatel-Lucent Deutschland AG, 70435 Stuttgart (DE)
(72) Inventor: Karla, Ingo Dr., 46514 Schermbeck (DE); Sigle, Rolf Dipl.-Ing., 73630 Remshalden (DE); Blau, Ingmar Dipl.-Ing., 10961 Berlin (DE); Wunder, Gerhard Dr., 10247 Berlin (DE)
(74) Representative: Richardt, Markus Albert

(57) **Abstract**

The invention relates to a method for assigning communication resources to a mobile radio device. The method comprises determining (101) information on a position of the mobile radio device and assigning (103) the communication resources to the mobile radio device depending on the information on the position of the mobile radio device.

## Description

The present invention relates to the field of radio communication networks, in particular to the field of heterogeneous radio communication networks.

In heterogeneous radio communication networks, a mobile device may experience an increased performance if communication resources associated with e.g. different radio access technologies are dynamically assigned to the mobile radio device. For example, the respective mobile radio device may communicate at a first time instant upon a basis of the GSM standard (GSM: Global System for Mobile Communications) and at a second time instant according to the UMTS standard (UMTS: Universal Mobile Telecommunications System).

In order to assign communication resources to mobile radio devices, multi-radio resource management (MRRM) may be performed according to which e.g. voice users are assigned to communication resources upon the basis of the required resource costs which is known as the cost based multi-radio resource management algorithm. This algorithm reassigns frequently users within one cell area to a respective air interface which is most suitable for communicating. While this algorithm achieves a performance gain, it has the drawback that it requires a large signaling effort and invokes many intersystem handovers (IS-HO) introducing significant signaling delays negatively affecting the system's performance. Moreover, the required resource costs which are essential for a network base station to serve a respective user are not determined in an optimum way since an exact mathematical evaluation is not feasible. Furthermore, in the case of a plurality of users, the cost based MRRM algorithm performs frequent cost calculations and frequent reassignments for all users which is associated with an enormous computation effort. Thus, it appears at least questionable whether the cost based MRRM algorithm is suitable for being implemented into already existing systems.

It is the object of the invention to provide a simple concept for assigning and/or for re-assigning communication resources to a mobile radio device.

This object is achieved by the features of the independent claims. Further advantageous embodiments are specified in the dependent claims.

The invention is based on the finding that a simple assignment and/or reassignment of communication resources may be obtained if assigning the communication resource preferably only upon the basis of a geographical location of a respective mobile radio device associated with a user. Thus, the only parameter is e.g. a distance of the mobile radio device with respect to a base station or an absolute position of the mobile radio device e.g. within a communication cell area. The distance to the base station or information on the geographical position of the mobile radio device may be derived upon a basis of a measurement of a communication path loss which may be performed at a base station or in a mobile terminal upon a basis of a predefined signaling message or upon a basis of other parameters such as the GSM timing advance. Thus, neither resource cost calculations nor frequent reassignments have to be performed. Furthermore, there are only few trigger events triggering a reassignment of the communication radio resources according to the inventive MRRM concept. In addition, a decision whether to reassign communication resources may be performed with a single user only. For example, the radio assignment (RA) selection may be performed at any time, e.g. during a call set-up. Alternatively, additional triggers may be activated in order to trigger the MRRM evaluation when a user, i.e. the mobile radio device, enters a RAT technology area or crosses a boarder between two radio access technology (RAT) areas associated with e.g. the UMTS or the GSM technology and/or associated with a certain RAT and a service preference for the mobile user.

According to the invention, the RAT may be selected by several different methods, e.g. only based on the distance to a base station, based on a distance to the base station, convoluted with the antenna diagram or with a direction dependent antenna gain, which basically leads to the path loss/signal strength, based on the radio path loss or on the signal to noise ration or on the received signal strength, based on the geographical position or on the mobile position relative to the base station(s), e.g. independently of a method by which this position has been determined, wherein e.g. a GSM timing advance may be used as a parameter in relation with the position of a user), or in combination of the above methods.

Furthermore, the users can also be differently assigned to different RAT technologies by different services. That means that in a certain area users with a particular service, for example a voice call, or best effort web-browsing, are assigned to a certain air interface, while users with another service may be assigned to a different RAT at the same location. Users with a certain service may be assigned in a certain area or at certain a distance or depending on a path loss preferably to a particular RAT.

The inventive location based RAT selection may be implemented as a MRRM algorithm nearly reproducing the user distribution outcome of the much more complex pure cost based MRRM algorithm mentioned above. The performance of the inventive MRRM algorithm is, at least for low user mobility, similar to the performance of the complex cost based algorithm mentioned above. However, the inventive approach does not suffer from the drawback of the very high signaling and computation effort.

It is the advantage of the inventive approach that it is simple, efficient and maximizes the cell throughput based on exploiting the properties of radio channels depending on distance information. The performance of the inventive approach is comparable to the more complex cost based MRRM algorithm although the complexity of the inventive algorithm is low making it feasible to be implemented into existing systems.

The invention relates to a method for assigning communication resources to a mobile radio device. The method comprises determining information on a position of the mobile radio device and assigning the communication resources to the mobile radio device depending on the determined information on the position of the mobile radio device, in particular depending only on the position of the mobile radio device.

According to an aspect, the communication resources are UMTS or GSM or Bluetooth or WLAN (WLAN: Wireless Local Area Network) or WiMAX or CDMA2000 (Code Division Multiplex Access) or LTE (Long Term Evolution) resources or resources of any other radio technology.

According to an aspect, the information on the position of the mobile radio device indicates a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

According to an aspect, the communication resources are further assigned depending on a service, in particular on an internet protocol service or on a web service or on a real time on a non-real time service or on conversation service or on a streaming service or on a best effort service, or on a quality of service.

According to an aspect, the position of the mobile radio device is determined upon the basis of a communication path loss measurement.

According to an aspect, the method comprises assigning first communication resources to the mobile radio device if the mobile radio device is positioned within an area associated with the first communication resources and assigning second communication resources if the mobile radio device is positioned within an area associated with the second communication resources.

According to an aspect, the method comprises communicating according to a communication standard according to the assigned communication resources.

The invention further relates to a network entity, e.g. a base station or a mobile terminal, comprising measurement means for measuring information on a position of a mobile radio device, processor means for assigning communication resources to the mobile radio device depending upon information on the position of the mobile radio device and transceiver means for communication with the mobile radio device according to the assigned communication resources.

According to an aspect, the information on the position of the mobile radio device indicates a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

The invention further relates to a computer program for performing the method for assigning communication resources when the computer program runs on a computer. The term "computer" includes a convenient computer or a mobile terminal or programmable boards in the base stations.

Further embodiments of the invention will be described with respect to the accompanying figures, in which:
Fig. 1 shows the steps of the method for assigning communication resources;
Fig. 2 shows an example of user distribution depending upon a distance between the user and a base station; and
Fig. 3 shows a performance comparison between different MRRM algorithms.

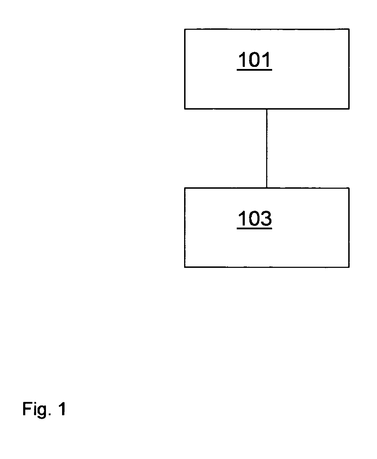

As depicted in Fig. 1, the method for assigning communication resources comprises the step 101 of determining a position of a mobile radio device and the step 103 of assigning the communication resources to the mobile radio device depending upon the determined position of the mobile radio device. Preferably, the communication resources are assigned depending only on the information on the position of the mobile radio device with respect to a base station or on the geographical position.

Thus, the inventive approach basically assigns the radio access technology to a mobile radio device depending on its location. For example, circuit switched voice users which are located close to a base station may be assigned to the UMTS technology and voice users which are more distant from the base station may be assigned to the GSM air interface. The user separation is based on the assumption that in each geographical area a certain air interface appears to the best suited to serve the mobile radio device with a particular service. The geographical area in which the mobile radio device may achieve an increased performance when using a certain RAT may depend on a traffic load, on a service mix and/or on a cell layout with respect to the employed radio access technologies. Preferably, a separation of the RAT areas may be provided so that a quick decision as to whether to change the RAT may be made. Preferably, there are predefined areas within which a user with a certain service is assigned preferably to a particular RAT. These predefined areas may be dynamically reconfigured depending on the load and service mix situation in the radio network.

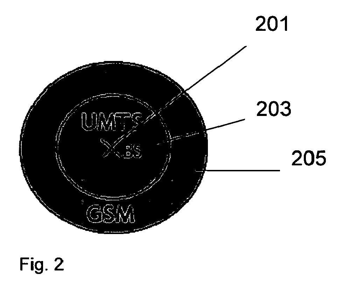

Fig. 2 shows an example of UMTS and GSM assignment approach in dependence on a distance between a mobile radio device and a base station 201 (BS). For example, within a first distance area 203 surrounding the base station 201, the UMTS technology may be used. Outside the area 203, an outer area 205 may be specified in which the GSM technology is used. The example shown in Fig. 2 relates e.g. to circuit switched traffic systems where the required GSM resources for a call may depend on time slots which is independent from a distance of a user with respect to the base station while the required UMTS resources which are interference limited for e.g. a call or a transmit (Tx) power may depend on the distance.

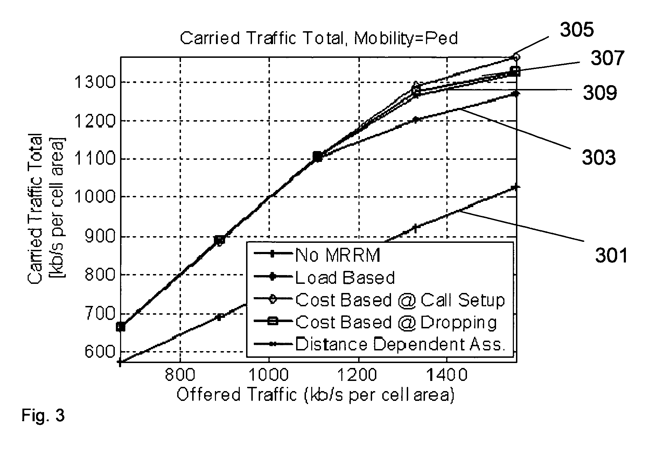

Fig. 3 shows by way of example a performance comparison between different MRRM algorithms for circuit switched traffic approaches in a multi-cell GSM-UMTS simulation environment based upon a real simulation scenario. The mobility of the mobile radio devices is set to 3 km/h which is associated with a pedestrian velocity. The simulation results demonstrate the total carried traffic in kb/s per cell area versus offered traffic in kb/s per cell area with a graph 301 being obtained when no MRRM approach is used, a graph 303 being obtained upon the basis of load based MRRM approaches, a graph 305 being obtained upon the cost based MRRM approach at call setup, a graph 307 being obtained with a cost based MRRM approach at dropping and a graph 309 being obtained upon the basis of the inventive distance dependent assignment approach.

Clearly, the performance of any MRRM managed system is superior with respect to systems which do not employ any MRRM approach at all. The load based MRRM algorithm associated with the graph 303 prevents overload and reassigns users to alternative radio access technologies in the case of dropping. However, this algorithm does not consider any preferences of resource costs or geographical areas. The cost based MRRM associated with the graph 305 shows a good system's performance arising from a spatial separation of the users. At the pedestrian mobility, the performance of the inventive distance dependent radio access technology assignments MRRM algorithm associated with the graph 309 is comparable to the much more complex cost based algorithms. Thus, the inventive algorithm provides a suitable trade-off between performance gain and complexity.

For higher user mobility, more triggers may be employed so that a trigger may be released at a beginning of a call setup and, additionally, further triggers may be employed when a certain user crosses a boarder between e.g. two regular access technology regions.

The inventive approach may be implemented in hardware or in software as an algorithm, by way of example. The inventive algorithm may further be preconfigured in order to determine in which areas or at which user to base station distances or path losses a user a particular radio access technology forming an embodiment of communication resources may be assigned to a particular mobile radio device. Such a configuration parameter may be achieved and may further be adapted during operation depending on the offered traffic load and/or as service mix condition.

## Claims

1. Method for assigning communication resources to a mobile radio device, the method comprising:
Determining (101) information on a position of the mobile radio device; and
Assigning (103) communication resources to the mobile radio device depending on the determined information on the position of the mobile radio device.

2. The method according to claim 1, the communication resources comprising UMTS (Universal Mobile Telecommunications System ) or GSM (Global System for Mobile Communications) or Bluetooth or WLAN (WLAN: Wireless Local Area Network) or WiMAX or CDMA2000 (Code Division Multiplexing Access or LTE (Long Term Evolution) resources.

3. The method according to anyone of the preceding claims, the information on the position of the mobile radio device indicating a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

4. The method according to anyone of the preceding claims, the communication resources being further assigned depending on a service, in particular on an internet protocol service or on a web service or on a real time on a non-real time service or on conversation service or on a streaming service or on a best effort service, or on a quality of service.

5. The method according to anyone of the preceding claims, comprising assigning first communication resources to the mobile radio device if the mobile radio device is positioned within an area associated with the first communication resources and assigning second communication resources if the mobile radio device is positioned within an area associated with the second communication resources.

6. The method according to anyone of the preceding claims, comprising communicating according to a communication standard according to the assigned communication resources.

7. A network entity, in particular a base station or a mobile terminal, base station, comprising:
- measurement means for measuring information on a position of a mobile radio device;
- processor means for assigning communication resources to the mobile radio device depending upon the information on a position of the mobile radio device, in particular only upon the basis of the mobile radio device; and
- transceiver means for communication with the mobile radio device according to the assigned communication resources.

8. The network entity according to claim 7, the communication resources comprising UMTS or GSM or Bluetooth or WLAN or WiMAX or CDMA2000 or LTE resources.

9. The network entity according to claim 7 or 8, the information on the position of the mobile radio device indicating a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

10. Computer program for performing the method according to anyone of the claims 1 to 6 when the computer program runs on a computer.

## Amended claims

### Amended claims in accordance with Rule 137(2) EPC.

**1.** Method for assigning communication resources to a mobile radio device, the method comprising:
determining (101) information on a position of the mobile radio device;
assigning (103) communication resources to the mobile radio device depending on the determined information on the position of the mobile radio device; and
assigning first communication resources to the mobile radio device if the mobile radio device is positioned within an area associated with the first communication resources and assigning second communication resources if the mobile radio device is positioned within an area associated with the second communication resources;
**characterized by** communicating according to a communication standard according to the assigned communication resources.

**2.** The method according to claim 1, the communication resources comprising UMTS (Universal Mobile Telecommunications System) or GSM (Global System for Mobile Communications) or Bluetooth or WLAN (WLAN: Wireless Local Area Network) or WiMAX or CDMA2000 (Code Division Multiplexing Access or LTE (Long Term Evolution) resources.

**3.** The method according to anyone of the preceding claims, the information on the position of the mobile radio device indicating a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

**4.** The method according to anyone of the preceding claims, the communication resources being further assigned depending on a service, in particular on an internet protocol service or on a web service or on a real time on a non-real time service or on conversation service or on a streaming service or on a best effort service, or on a quality of service.

**5.** A network entity, in particular a base station or a mobile terminal, base station, comprising:
- measurement means for measuring information on a position of a mobile radio device; and
- processor means for assigning communication resources to the mobile radio device depending upon the information on a position of the mobile radio device, upon the basis of the mobile radio device, and for assigning first communication resources to the mobile radio device if the mobile radio device is positioned within an area associated with the first communication resources and assigning second communication resources if the mobile radio device is positioned within an area associated with the second communication resources;
**characterized by** transceiver means for communication with the mobile radio device according to a communication standard according to the assigned communication resources.

**6.** The network entity according to claim 5, the communication resources comprising UMTS or GSM or Bluetooth or WLAN or WiMAX or CDMA2000 or LTE resources.

**7.** The network entity according to claim 5 or 6, the information on the position of the mobile radio device indicating a distance of the mobile radio device with respect to a base station or a geographical position of the mobile radio device or a path loss between the mobile radio device and the base station or signal to interference ratio or a signal to interference plus noise ratio in a channel between the mobile radio device and the base station, or a distance convoluted with an antenna diagram.

**8.** Computer program for performing the method according to anyone of the claims 1 to 4 when the computer program runs on a computer.
